# EUROPEAN PATENT APPLICATION

(11) **EP 1 168 173 A2**
(43) Date of publication of application: **02.01.2002**
(21) Application number: 01305248.5
(22) Date of filing: 15.06.2001
(51) Int. Cl.: G06F 11/10

(54) **Fault tolerant storage device with cache**

(30) Priority: 29.06.2000 US 607581
(71) Applicant: Snap Appliances, Inc., San Jose, California 95124 (US)
(72) Inventor: Heathorn, Trevor, Palo Alto, California 94303 (US)
(74) Representative: Charig, Raymond Julian

(57) **Abstract**

A method and apparatus using a cache system to reduce the overhead of conventional RAID 5 systems. The cache maintains both data and associated parity stripes. A write request from the file system causes the old data and associated old parity to be read into the cache if not already present therein. The old parity is overwritten in the cache by new parity. The new data is then written to disk, while the parity block in the cache is marked for subsequent writing to the disk. When the data write from the cache to disk completes, the original file system write request is completed. Subsequent writes may modify the same parity block existing in the cache, which has not yet been written to disk. The parity block is subsequently written to disk when e.g. the file system does a flush during a system idle condition, or when the parity stripe is the oldest one in the cache and the space for it must be re-used for another write. The cache can also be used as a "look-aside" cache for file system data reads.

## Description

### Field of the Invention

The present invention relate to data storage in computer systems, and more particularly, to fault-tolerant data storage using an array of storage units.

### Background of the Invention

Storage devices of various types are utilized for storing information such as in computer systems. Conventional computer systems include storage devices such as disk drives for storing information managed by an operating system file system. With decreasing costs of storage space, an increasing amount of data is stored on individual disk drives. However, in case of disk drive failure, important data can be lost. To alleviate this problem, some fault-tolerant storage devices utilize an array of redundant disk drives (RAID).

In one of the RAID architectures, commonly referred to as RAID 5, parity error correction is used to provide redundant information, whereby a disk failure does not lead to data loss. A plurality of disks (redundancy group) are divided into equally sized address areas (blocks), wherein each disk can contain the same number of blocks. Blocks on a disk within a redundancy group having the same disk address ranges are commonly referred to as stripes. Each stripe includes blocks of data and a parity block stored on one disk containing parity information of the remainder of the stripe. In case of a disk failure, the parity information prevents data loss.

However, a disadvantage of the RAID 5 architecture is the high overhead involved in maintaining current parity information. Data writes in conventional RAID 5 systems requires two read operations (one for data and one for old parity), an XOR (old parity XOR old data XOR new data), and two write operations (one for new data and one for new parity). This increases the overhead to four I/O operations in RAID 5 systems, compared to one I/O operation in non-redundant systems.

There is, therefore, a need for a method and system to reduce overhead associated with read/write operations in the RAID 5 systems, while maintaining the fault-tolerance characteristics of the RAID 5 systems.

### Brief Summarv of the Invention

The present invention satisfies these needs. In one embodiment the present invention provides a method and apparatus using a cache system to reduce the overhead of conventional RAID systems. The cache maintains both data and associated parity stripes. A write request from the file system causes the old data and associated old parity to be read into the cache if not already present therein. The old parity is over-written in the cache by new parity. The new data is then written to disk, while the parity block in the cache is marked for subsequent writing to disk. When the data write from the cache to disk completes, the original file system write request is completed. Subsequent writes may modify the same parity block existing in the cache, which has not yet been written to disk. The parity block is later written to disk when e.g. the file system does a flush during a system idle condition, or when the parity stripe is the oldest one in the cache and the space for it must be re-used for another write. The cache can also be used as a "look-aside" cache for file system data reads.

As such, the overhead for file system write requests is reduced from four I/O operations by deferring and optimizing the writing of parity information to disk, greatly improving performance of conventional RAID systems, while maintaining redundancy. Additionally, performance for file system read requests is improved by checking for requested data blocks in the cache.

### Brief Description of the Drawings

These and other features, aspects and advantages of the present invention will become better understood with regard to the following description, appended claims and accompanying drawings where:
FIG. 1 shows an example block diagram of an embodiment of the architecture of a fault tolerant storage system including an array of disks, according to the present invention;
FIG. 2 shows an example layout of data stripes and associated parity stripes on the array of disks the disks in FIG. 1;
FIG. 3 shows an embodiment of an example functional architecture of a controller for the system of FIG. 1, according to the present invention;
FIG. 4 shows an example layout of information in a cache in the architecture of FIG. 3 according to the present invention;
FIG. 5 shows an example flowchart of an embodiment of steps taken by a driver in controller of FIG. 3 in response to file system write requests;
FIG. 6 shows an example flowchart of an embodiment of steps for the driver of FIG. 3 in checking the cache for data/parity stripes requested by a file system write, and reading missing stripes from disk; and
FIG. 7 shows an example flowchart of an embodiment of steps for the driver of FIG. 3 in satisfying a file system read request.

Like reference numbers and designations in the drawings refer to like elements.

### Detailed Description of the Invention

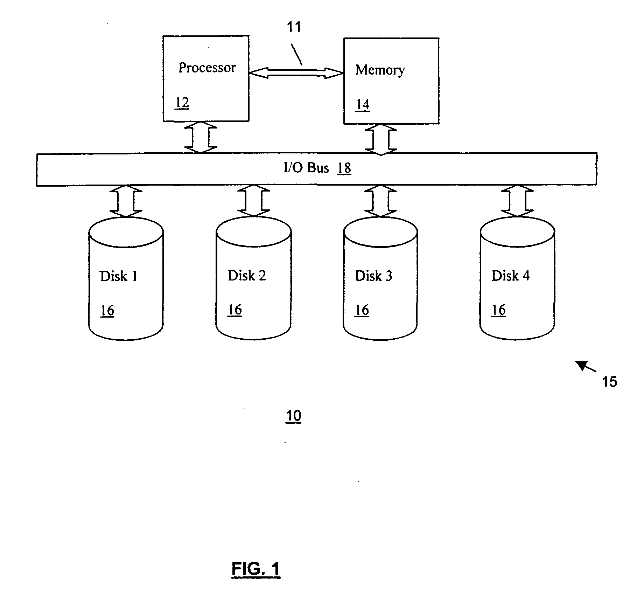

FIG. 1 shows an example block diagram on an embodiment of a redundant disk system 10 in which the present invention can be implemented. The system 10 comprises a processor 12 (including e.g. CPU) interconnected to a memory 14 via a bus 11, and an array 15 of disk drives 16 (e.g., Disk_1, Disk_2, Disk_3, Disk_4, etc.), interconnected via an I/O bus 18. The terms disks and disk drives are used interchangably herein. The disk drives 16 are arranged in a RAID configuration (e.g., RAID5).

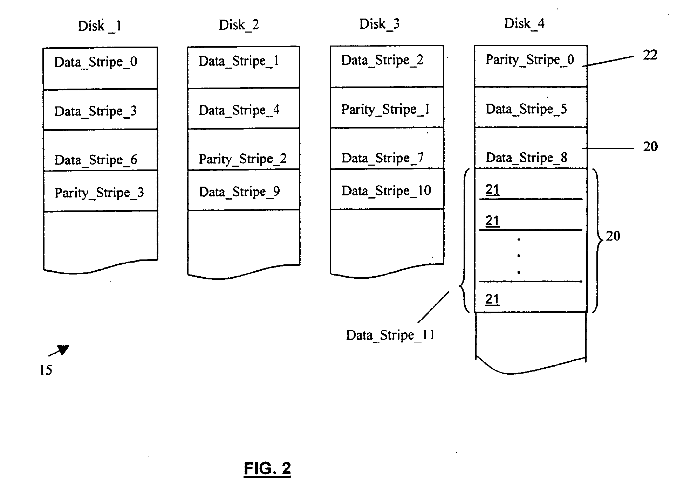

FIG. 2 shows layout of data stripes 20 and associated parity (error-correction) stripes 22 including error-correction information on the disks 16 . In this example, parity stripes 22 associated with the plurality of data stripes 20 are stored on differing disks in the array 15. Each data stripe 20 includes an integer number of data blocks 21 assigned to a file system. Each parity stripe 22 includes an Exclusive OR (XOR) of the corresponding data stripes 20 on the other disks. For example, in FIG. 2, Parity_Stripe_0 is calculated as:
Data_Stripe_0 XOR Data_Stripe_1 XOR Data_Stripe_2.

An error-correction method in addition to or in lieu of XOR-generated parity may be used for the necessary redundancy information.

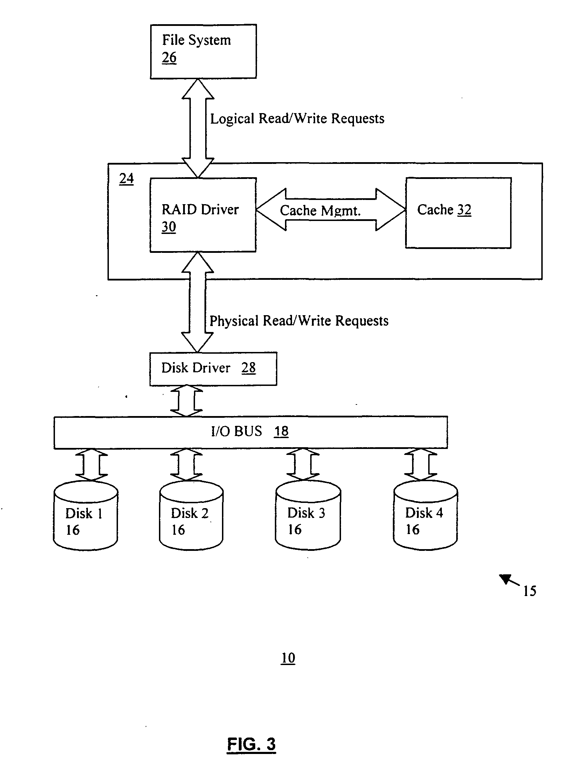

FIG. 3 shows an embodiment of an example functional architecture of an embodiment of a controller 24 according to the present invention for a redundant disk system including a file system 26, a disk driver 28, and disk drives 16, interconnected via the I/O bus 18. The controller 24 comprises a RAID driver 30 and cache 32.

The file system driver 26 can reside in the main memory 14 and execute in the processor 12. In one implementation, the file system driver (along with the rest of the operating system) is either loaded from a flash EEPROM at system startup or is loaded from one or more of the disk drives at system startup. The data blocks 20 included in the file system occupy an arbitrary number of contiguous data blocks 21 on the disk drives 16.

The file system 26 issues read and write requests for data blocks to the controller 24. The RAID driver 30 manages the cache 32, to satisfy the file system requests. If a file system write request references one or more data stripes 20 not in the cache 32, then the RAID driver 30 issues read requests to the disk driver 28 to move the referenced stripes 20 from one or more disks 16 to the cache 32. In one example, the cache 32 can comprise a portion of the memory 14 containing data and parity stripes. The cache 32 can also be a dedicated memory device connected to the RAID driver 30 and the disk drives 16 via an I/O bus (e.g., common SCSI bus, IDE bus, fiber channel, etc.).

The RAID driver 30 uses the caching mechanism to increase performance of a RAID system by deferring and optimizing the writing of parity information to disk while minimizing the increased possibility of data loss. Data writes in conventional RAID systems involve two disk reads (old data and old parity), an XOR operation (old parity XOR old data XOR new data), and two disk writes (new data and new parity). This can increase the overhead to four I/O operations per file system write request compared with one I/O operation in a non-redundant system.

Using a cache system according to the present invention, can reduce the overhead of conventional RAID 5 systems to a single disk write of the new data. The cache 32 maintains data stripes and associated parity stripes. A write request from the file system 26 causes the old data and associated old parity to be read into the cache 32 if not already present therein. The old parity is over-written in the cache 32 (e.g., by XORing the old data and then the new data). The new data is then written to disk, while the parity block in the cache 32 is marked (e.g., placed in a write queue described below) and is written to disk at a later time such as e.g. after a time interval, or upon a condition such as e.g. when the cache is full, etc..

When the data write from the cache 32 to disk completes, the original file system write request is completed. Subsequent writes may modify the same parity block existing in the cache 32, which has not yet been written to disk. The parity block is subsequently written to disk when e.g. the file system 26 does a flush during a system idle condition, or when the parity stripe is the oldest one in the cache 32 and the space for it must be re-used for another write. The cache can also be used as a "look-aside" cache for file system data reads.

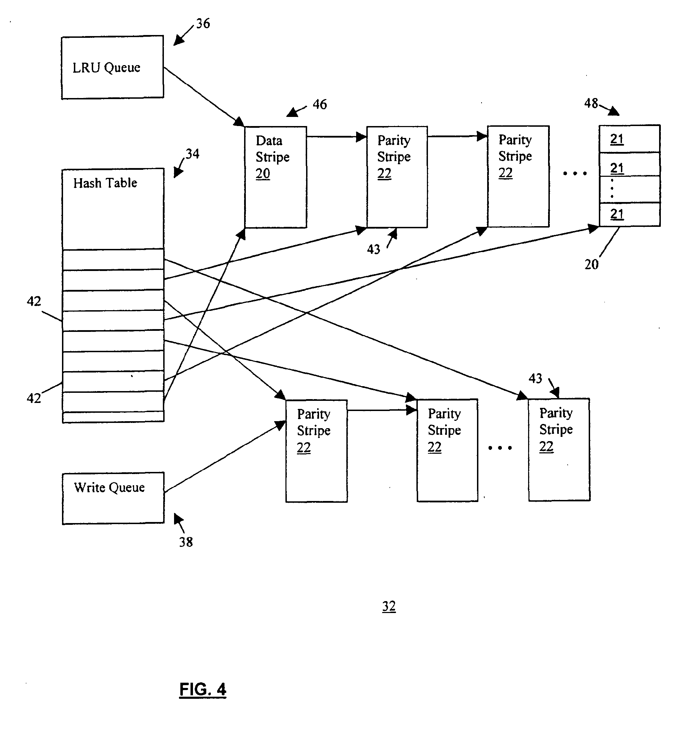

FIG. 4 shows an example layout of information in the cache 32 according to the present invention. In this example, the function of the cache 32 is to reduce the number of disk read and write requests needed to satisfy a file system write request by retaining the most recently used data and parity stripes in the cache 32. To manage the stripes in the cache 32, in one embodiment the RAID driver 30 maintains a hash table 34, a Least Recently Used (LRU) queue 36, and a write queue 38 in the cache 32.

The hash table 34 can comprise a standard hash table as a lookup mechanism to determine whether or not a stripe is present in the cache. The hash table 34 includes references to one or more buffers 43 in the cache 32, each buffer 43 containing blocks of information including at least a data stripe 20 or a parity stripe 22 in the cache 32. In one implementation, the hash table 34 includes an entry reference 42 for each data stripe 20 and an entry reference 42 for each parity stripe 22 in the cache 32. Alternative to the hash table 34, other means such as other data structures (e.g., linked list) for keeping track and lookup of stripes 20, 22 in the cache 32 can also be utilized.

The LRU queue 36 includes a list of references to one or more buffers 43 in the cache 32, each buffer 43 including a stripe 20 or a stripe 22 in the cache 32, wherein the reference for a stripe accessed the furthest in the past is placed at the head 46 of the LRU queue 36 and the reference for a stripe accessed most recently is placed at the tail 48 of the LRU queue 36.

The LRU queue 36 includes references to both data stripes 20 and parity stripes 22 that are not currently in use (i.e. are not being used by any in-progress file system read request or write request). A stripe on the LRU queue 36 may not also simultaneously be on the write queue 38. The LRU queue 36 includes references to stripes 20, 22 that need not be written to the array 15. In one version, the LRU queue 36 comprises an ordered list of entries (oldest entry at top of the list, newest entry at end of the list), and as such other ordered lists can also be utilized. In one example, the LRQ queue 36 is implemented as a linked list of entries in memory.

The write queue 38 includes a list of references to one or more buffers 43 in the cache 32, each buffer 43 including a stripe 22, such that all the parity stripes 22 that have been modified but not yet written to disk are referenced by the write queue 38 (are on the write queue 38). The write queue 38 refers to parity stripes 22 only, and those parity stripes 22 are written to disk when presence of at least one preselected condition is detected e.g. at fixed intervals of time, or when a "Cache Full" condition occurs. A stripe 22 on the write queue 38 may not also simultaneously be on the LRU queue 36. In one version, the write queue 38 comprises an ordered list of entries, providing FIFO wherein the oldest entry is at the top of the list, and the newest entry is at the end of the list. One implementation of the write queue comprises a linked list of entries in memory.

A portion of the cache 32 is partitioned into stripes of blocks compatible with the stripe/block structure of the disk drives. The RAID driver 30 identifies an updated memory block storing data to be written to one of the plurality of disk drives, and identifies a predetermined stripe, said predetermined stripe including a disk block to be overwritten by said updated memory block.

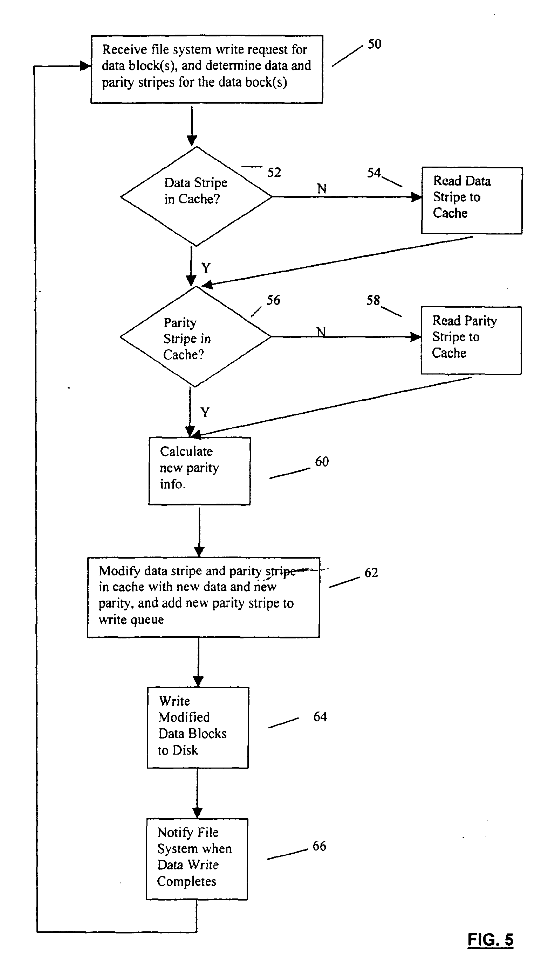

FIG. 5 shows an example flowchart of steps taken by the RAID driver 30 in response to file system write requests. In the idle state, all of the stripes 20, 22 in the cache 32 are placed on the LRU queue 36 and the write queue 38 is empty. The file system write request is for one or more data blocks 20 containing new data from the file system. Upon receiving the write request, the RAID driver 30 determines the data stripe 20 and associated parity stripe 22 corresponding to the data blocks (step 50).

The correspondence between the data blocks passed in the file system request and the corresponding data stripe is based on arithmetic. Each data stripe 20 (FIG. 2) includes a fixed count of numbered file system data blocks 21 (e.g., N blocks 21 per data stripe 20). Therefore, dividing a data block number by N provided the corresponding data stripe number, while the remainder (from the division operation) indicates the data block 21 offset within the data stripe 20. For example, if N=8 and the data block number is 19, then that corresponds to the third block of Data_Stripe_2.

The RAID driver 30 then looks in the hash table 34 in the cache 32 to check whether the determined data stripe 20 is present in the cache 32 (step 52). If the data stripe 20 is not present in the cache 32 ("Cache Miss" condition) then the RAID driver 30 issues a read command to the disk driver 28 to read the data stripe 20 from one or more of the disks into the cache 32 (step 54). The RAID driver 30 then looks in the hash table 34 in the cache 32 to check whether the associated parity stripe 22 is present in the cache (step 56).

If the parity stripe 22 is not present in the cache 32 ("Cache Miss" condition) then the RAID driver 30 issues a read command to the disk driver 28 to read the parity stripe 22 from one disk drive into the cache 32 (step 58). The determined data stripe 20 and associated parity stripe 22 contain old data and associated old parity information, respectively. Each data stripe 20 or parity stripe 22 resides on a single disk drive. A single file system to write or read multiple data blocks 21 can span multiple corresponding data stripes 20 and associated parity stripes 22, and the steps described herein apply to such a case.

The RAID driver 30 then calculates new parity information based on the new data, the old data, and the old parity (e.g., new parity = old parity XOR old data XOR new data) (step 60). The RAID driver 30 modifies data blocks containing old data in the data stripe 20 in the cache 32 with the new data (new data overwrites old data), modifies the parity stripe 22 in the cache 32 with the new parity information, and places the modified parity stripe 22 in the write queue 38 for subsequent write to a disk (e.g., subsequent write to disk at a fixed time interval or when a Cache Full condition arises) (step 62). The RAID driver 30 then writes the modified data blocks in the data stripe 20 to one or more disks (step 64), and when completed the file system is informed that the original file system write request has completed (step 66). The above steps can be repeated for further file system write requests.

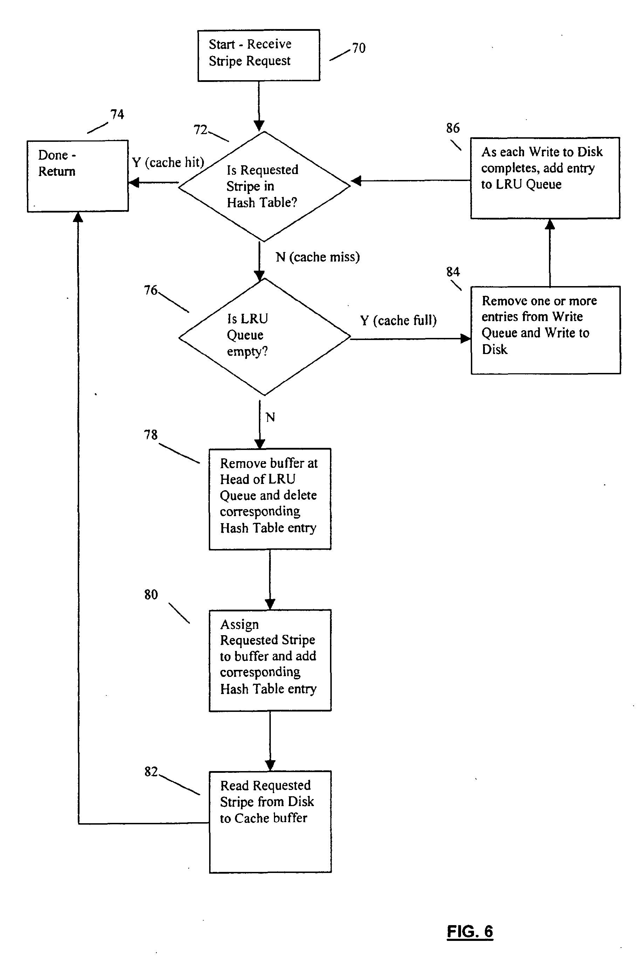

FIG. 6 shows an example flowchart of for steps 54 or 58 in FIG. 5 for the RAID driver 30 reading a stripe 20 or 22 into the cache 32, by receiving the stripe request (step 70), checking the cache 32 for the stripe 20 or 22 requested by a file system write, and reading missing stripes from disk. The RAID driver 30 looks in the hash table 34 to check if the request data/parity stripe is in the cache 32 ("Cache Hit" condition) (step 72). If so, the requested data blocks within the stripe in the cache are available for the file system (step 74). If in step 72 the data and/or parity stripe is not present in the cache 32 ("Cache Miss"), then the RAID driver 30 checks if the LRU queue 36 is empty (step 76).

If in step 76 the LRU queue is not empty, the RAID driver 30 removes a reference for a buffer 43 at the head 46 of the LRU queue 36 and deletes a corresponding reference entry 42 for the buffer 43 in the hash table 34 (step 78), so that the buffer 43 can be re-used. In reading a stripe from disk to the cache 32 (to satisfy a file system write request) the oldest buffer in the cache 32 (i.e. a buffer with a reference at the head of the LRU queue 36) is overwritten with the stripe read from disk. The RAID driver 30 assigns the requested stripe to the buffer 43, and adds a corresponding reference entry in the hash table for the stripe (step 80). The requested stripe is then read from disk into that buffer 43 in the cache (step 82) and is available for the file system (step 74) (return to calling routine in step 54 or 58 in FIG. 5, allowing step 54 to proceed to step 56, or step 58 to proceed to step 60).

If in step 76, the LRU queue 36 is empty ("Cache Full" condition), the RAID driver 30 removes one or more buffers 43 (entries) from the write queue 38 (containing modified parity stripes 22) and writes them to disk (step 84), and as writing each parity stripe to disk completes, a new reference entry for the parity stripe 22 written to disk is added to the LRU queue 36 for re-use (step 86). As each parity stripe 22 is written to disk, the reference for a buffer 43 including the parity stripe 22 is removed from the write queue 38 and a reference for that buffer 43 including the parity stripe 22 is added to the end of the LRU queue 36. Once there, the buffer 43 can be re-used to read another stripe into the cache 32. As such, if the LRU queue 36 is empty (step 76), the RAID driver 30 flushes (writes) parity stripes 22 on the write queue 38 to disk (step 84) to move those parity stripes 22 written to disk onto the LRU queue (step 86). Thereafter, the RAID driver 30 can proceed to step 78 (via steps 72 and 76) and reads the required stripe into the cache 32, thereby re-using the buffer 43 for the stripes at the head of the LRU queue 36.

In this example, the LRU queue 36 does not contain any stripes 20, 22 that need to be written to disk. The LRU queue 36 contains stripes that are in the cache 32 which have been used for a prior I/O operation. Any entry (i.e. buffer 43) on the LRU queue 36 can be re-used to read another stripe from disk if desired, such as shown by steps 78, 80, and 82 in FIG. 6. In FIG. 5, after writing modified data blocks in a data stripe 20 to disk in step 64, the buffer 43 containing that data stripe 20 is then added to the LRU queue 36. Only the write queue 38 references (parity) stripes 22 that must be written to disk prior to re-use of the buffers 43 in the cache 32 containing those parity stripes 22. Once writing said parity stripes 22 is completed, the buffers 43 containing said parity stripes are placed on the LRU queue 36. Data stripes 20 that have been modified, are written to disk at the time of the original file system write request, and then the buffers 43 containing such data stripes 20 are placed on the LRU queue 36.

As such in the example embodiment, the cache 32 contains stripes each including a number of blocks. The RAID driver 30 receives one or more modified blocks from the file system per write request. The RAID driver 30 reads complete stripes from the disk into the cache 32, and writes only modified blocks within a stripe from the cache 32 to the disk (not necessarily the whole stripe). This avoids the overhead of writing unmodified blocks within a stripe from the cache to disk.

The present invention improves system performance by reducing the total number of I/O Requests (four in a conventional RAIDS system) sent to disk driver 28 when the file system write request is received. If the required/requested data and parity stripes are present in the cache 32 then no disk reads are required. If only one of the stripes is present in the cache 32, then one disk read is required. If neither stripe is present in the cache 32, then two disk reads are required. Because the file system has a tendency to reference adjacent or nearby data blocks on successive write requests, this increases the probability of the required stripes being in the cache 32 (the "Cache Hit Ratio").

Further, because writing modified parity stripes from the cache 32 to disk is deferred and only the new data blocks are written from the cache 32 to disk immediately, there is normally only one disk write per file system write request (an exception being in the Cache Full condition). An additional benefit is that a subsequent file system write request may modify a parity stripe that is already in the cache 32 (e.g., on the write queue), resulting in an eventual single parity stripe write for many file system write requests.

The RAID driver 30 further minimizes possibility of data loss because the caching of modified parity stripes can recover from either power loss or disk failure. If a single disk failure occurs, then the modified parity stripes in the cache 32 are written to the remaining disks resulting in a state consistent with a conventional RAID system that has suffered a single disk failure. If a power loss occurs, then all parity stripes on all disks are recalculated and written to the disks when the system is next powered up, resulting in a fully functional RAID system.

If a disk failure is followed by a power loss before the modified parity stripes on the write queue 38 have been written to the remaining disks then there is a possibility of data loss. The data stripe on a failed disk can normally be recalculated from the corresponding data stripes and parity stripe on the remaining disks. For example, if Disk_2 in FIG. 2 fails, then Data_Stripe_4 can be recalculated according to standard RAID algorithms (e.g., Data_Stripe_4 = Data_Stripe_3 XOR Parity_Stripe_1 XOR Data_Stripe_5). However, if the Parity_Stripe_1 was not written to Disk_2 before the power loss then, on a subsequent power up, Data_Stripe_4 cannot now be recalculated as the information contained in Parity_Stripe_1 is out of date. This is a very small possibility of a data loss as compared with conventional RAID systems, and very tolerable in view of the increased performance benefits provided by the present invention.

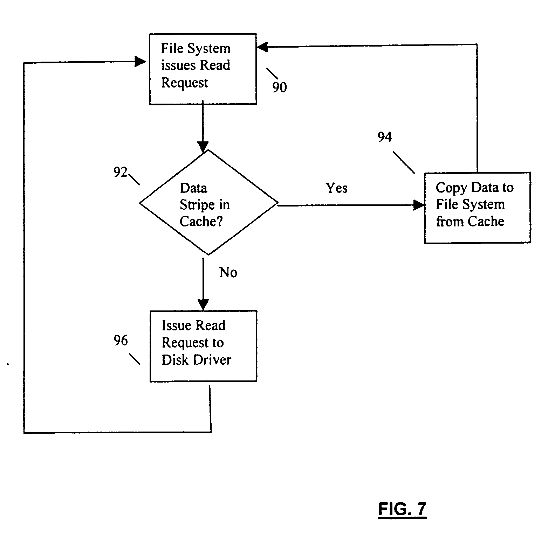

Referring to the flow diagram in FIG. 7, when the file system issues a read request for one or more blocks of data (step 90), the RAID driver 30 determines the data stripe for the data blocks, and looks in the hash table 34 in the cache 32 to check if the data stripe is present in the cache 32 (step 92). If so, the data is transferred out directly from the cache 32 (step 94). If the data stripe is not present in the cache 32, the driver passes the read request to the disk driver 28 (step 96). In this example, file system read requests do not result in data stripes being read into the cache 32 as this can cause parity stripes to be flushed out of the cache 32 (e.g., written to disk), thus reducing performance for file system write requests.

The disk driver 28 comprises an operating system driver for moving disk blocks between the memory 14 and the disk drives 16 via the I/O bus 18. On write requests, the disk driver 28 transfers a specified number of blocks from the memory 14 to a specified location (by the block number) on one or more disk drives 16. On read requests, the disk driver 28 transfers a specified number of blocks from one or more disk drive 16 to the memory 14. The disk driver 28 can be implemented for different bus implementations such as for SCSI, IDE, fiber channel, etc.

In one embodiment, the controller 24 can be implemented on a computer system including the PROCESSOR 12 and the memory 14. The memory 14 can comprise random access memory (RAM) or other dynamic storage device for storing information and instructions to be executed by the PROCESSOR 12. The memory 14 can further include read only memory (ROM) or other static storage device for storing static information and instructions for the PROCESSOR 12. The memory 14 can further include a magnetic or optical disk for storing information and instructions. The steps performed by the RAID driver 30 of the controller 24 is provided by the controller 24 in response to the PROCESSOR 12 executing one or more sequences of one or more instructions contained in the memory 14.

Such instructions can be read into the memory 14 from another computer readable-medium, such as a magnetic or optical disk. Execution of the sequences of instructions contained in the memory 14 causes the PROCESSOR 12 to perform process steps described herein. One or more processors in a multi-processing arrangement can also be employed to execute the sequences of instructions contained in the memory 14. In alternative embodiments, hard-wired circuitry (e.g., ASIC) may be used in place of, or in combination with, software instructions to implement the invention. Thus, embodiments of the invention are not limited to any specific combination of hardware circuitry or software.

For example, in another embodiment, the controller 24 can be implemented on a separately programmable processor independent of the PROCESSOR 12, to perform the steps of the present invention described and shown in flowcharts herein (in that case, the disk driver 28 can also run on that separate processor, making the implementation suitable for a plug-in RAID controller on a PC, for example).

The term "computer-readable medium" as used herein refers to any medium that participated in providing instructions to the processor 12 for execution. Such a medium may take may forms, including but not limited to, non-volatile media, volatile media, and transmission media. Non-volatile media includes, for example, optical or magnetic disks. Volatile media includes dynamic memory, such as RAM. Transmission media includes coaxial cables, copper wire and fiber optics. Transmission media can also take the form of acoustic or light waves, such as those generated during radio wave and infrared data communications. Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to the processor 12 for execution. For example, the instructions may initially be carried on a magnetic disk of a remote computer. The remote computer can load the instructions into its dynamic memory and send the instructions over a telephone line using a modem. A modem local to the processor 12 can receive the data on the telephone line and use an infrared transmitter to convert the data to an infrared signal. An infrared detector coupled to the bus 11 can receive the data carried in the infrared signal and place the data on the bus 11. Bus 11 carries the data to the main memory 14, from which processor 12 retrieves and executes the instructions. The instructions received in the memory 12 may optionally be stored on a disk/optical drive either before or after execution by the processor 12.

Although the present invention has been described in considerable detail with regard to the preferred versions thereof, other versions are possible. Therefore, the appended claims should not be limited to the descriptions of the preferred versions contained herein.

## Claims

1. A method for storing data in a fault-tolerant storage device having an array of failure independent storage units for storing information as stripes of blocks, including at least data blocks and associated error-correction blocks, comprising the steps of:
(a) maintaining at least one cache for temporarily storing at least data blocks and associated error-correction blocks;
(b) identifying one or more data block areas on the array to write new data received in one or more new data blocks corresponding to the data block areas, the data block areas including old data and being related to one or more of said stripes;
(c) determining if the cache contains one or more data blocks containing said old data, and if not, reading said old data from the array into the cache;
(d) determining if the cache contains one or more error-correction blocks containing error-correction information associated with said old data, and if not, reading one or more blocks containing error-correction information associated with said old data from the array into the cache, the one or more error-correction blocks being related to one or more of said stripes;
(e) generating new error-correction information based on the information in said one or more error-correction blocks, said old data and said new data;
(f) overwriting said old data in said one or more data blocks in the cache with said new data;
(g) writing the new error-correction information in the one or more error-correction blocks in the cache for subsequent writing to the array; and
(h) writing the new data to said corresponding data block areas in the array.

2. The method of claim 1, wherein:
step (a) of maintaining the cache comprises maintaining the cache for temporarily storing at least one data stripe containing data blocks, and associated error-correction stripe containing error-correction information for the data blocks;
step (b) of identifying one or more data block areas comprises the steps of: identifying at least one data stripe including said one or more data block areas on the array;
step (c) of determining if the cache contains said one or more data blocks containing said old data comprises the steps of: determining if the cache contains said at least one identified data stripe including said one or more data blocks containing the old data, and if not reading said at least one identified data stripe containing the old data from the array into the cache;
step (d) of determining if the cache contains the error-correction blocks comprises the steps of: determining if the cache contains at least one associated error-correction stripe including said one or more error-correction blocks, and if not, reading the at least one associated error-correction stripe including said one or more error-correction blocks containing the error-correction information associated with said old data from the array into the cache;
step (f) of overwriting said old data in said one or more data blocks in the cache with said new data comprises the steps of: overwriting said old data in said one or more data blocks in said at least one identified data stripe in the cache with said new data;
step (g) of writing the new error-correction information in the one or more error-correction blocks in the cache comprises the steps of: writing the new error-correction information in said at least one associated error-correction stripe in the cache including said one or more error-correction blocks; and
step (h) of writing the new data to said corresponding data block areas in the array comprises the steps of: writing said new one or more data blocks to said corresponding data block areas in the at least one identified data stripe in the array.

3. The method of claim 2, wherein step (a) further includes the steps of: maintaining a list including one or more references to one or more stripes in the cache.

4. The method of claim 3, wherein step (c) further includes the steps of: checking said list to determine if the cache contains said at least one data stripe including the one or more data blocks containing the old data.

5. The method of claim 4, wherein the step of reading said at least one identified data stripe containing the old data from the array into the cache further includes the steps of: adding a reference to said list for each identified data stripe read into the cache.

6. The method of claim 3, wherein step (d) of determining if the cache contains said at least one associated error-correction stripe further includes the steps of: checking said list to determine if the cache contains said at least one associated error-correction stripe.

7. The method of claim 6, wherein step of reading said at least one associated error-correction stripe further includes the steps of: adding a reference to said list for each associated error-correction stripe read into the cache.

8. The method of claim 1, further comprising the step (i) of selectively writing one or more error-correction blocks in the cache containing new error-correction information to the array.

9. The method of claim 2, wherein the step of reading a stripe into the cache further includes the steps of: detecting presence of at least one preselected condition, and if said preselected condition is present, selectively writing one or more stripes from the cache to the array before reading said stripe into the cache.

10. The method of claim 9, wherein the step of detecting presence of said preselected condition includes the steps of: determining if the cache is full, and if so, selectively writing one or more stripes from the cache to the array before reading said stripe into the cache.

11. The method of claim 9, wherein the steps of selectively writing said one or more stripes from the cache to the array includes the steps of selecting one or more error-correction stripes including new error-correction information in the cache to write to the array.

12. The method of claim 2, wherein the step of reading a stripe into the cache further includes the steps of overwriting a least recently used stripe in the cache that has been written to the array.

13. The method of claim 1, further comprising the steps of:
receiving a read request for one or more data blocks containing requested data;
identifying one or more data block areas on the array corresponding to the one or more requested data blocks, the data block areas being related to one or more of said stripes containing the requested data;
determining if the cache contains one or more data blocks containing said requested data, and if so, providing the requested data from the cache.

14. A fault-tolerant storage device array, comprising:
(a) a plurality of failure independent storage units for storing information as stripes of blocks, including at least data blocks and associated error-correction blocks;
(b) at least one cache for temporarily storing at least data blocks and associated error-correction blocks;
(c) a controller in data communication with the array and with said at least one cache, comprising:
(1) identification means adapted for identifying one or more data block areas on the array to write new data received in one or more new data blocks corresponding to the data block areas, the data block areas including old data and being related to one or more of said stripes;
(2) error-correction data generator for generating error-correction information;
(3) cache manager adapted for:
(i) determining if the cache contains one or more data blocks containing said old data, and if not, reading said old data from the array into the cache; and determining if the cache contains one or more error-correction blocks containing error-correction information associated with said old data, and if not, reading one or more blocks containing error-correction information associated with said old data from the array into the cache, the error-correction blocks being related to one or more of said stripes;
(ii) generating new error-correction information via the error-correction data generator based on the information in said one or more error-correction blocks, said old data and said new data;
(iii) overwriting said old data in said one or more data blocks in the cache with said new data, and writing the new error-correction information in the one or more error-correction blocks in the cache for subsequent writing to the array; and
(iv) writing the new data to said corresponding data block areas in the array.

15. The storage device of claim 14, wherein:
the at least one cache is further for temporarily storing at least one data stripe containing data blocks, and associated error-correction stripe containing error-correction information for the data blocks;
the identification means further includes means for identifying at least one stripe including said one or more data block areas on the array;
the cache manager further includes: (1) means for determining if the cache contains said at least one identified data stripe including said one or more data blocks containing the old data, and if not reading said at least one identified data stripe containing the old data from the array into the cache; (2) means for determining if the cache contains at least one associated error-correction stripe including said one or more error-correction blocks, and if not, reading the at least one associated error-correction stripe including said one or more error-correction blocks containing the error-correction information associated with said old data from the array into the cache; (3) means for overwriting said old data in said one or more data blocks in said at least one identified data stripe in the cache with said new data; (4) means for writing the new error-correction information in said at least one associated error-correction stripe in the cache including said one or more error-correction blocks; and (5) means for writing said new one or more data blocks to said corresponding data block areas in the at least one identified data stripe in the array.

16. The storage device of claim 15, wherein the cache manager further includes a memory manager adapted for maintaining a list including one or more references to one or more stripes in the cache.

17. The storage device of claim 16, wherein the memory manager is further adapted for checking said list to determine if the cache contains said at least one data stripe including the one or more data blocks containing the old data.

18. The storage device of claim 17, wherein the memory manager is further adapted for adding a reference to said list for each identified data stripe containing old data read into the cache from the array.

19. The storage device of claim 16, wherein the memory manager is further adapted for checking said list to determine if the cache contains said at least one associated error-correction stripe

20. The storage device of claim 19 , wherein the memory manager is further adapted for adding a reference to said list for each associated error-correction stripe read into the cache from the array.

21. The storage device of claim 14 wherein the cache manager is further adapted for selectively writing one or more error-correction blocks in the cache containing new error-correction information to the array.

22. The storage device of claim 15, wherein the cache manager is further adapted for detecting presence of at least one preselected condition, and if said preselected condition is present, selectively writing one or more stripes from the cache to the array before reading a stripe into the cache.

23. The storage device of claim 22, wherein the cache manager is further adapted for detecting presence of said preselected condition by determining if the cache is full, and if so, selectively writing one or more stripes from the cache to the array before reading said stripe into the cache.

24. The storage device of claim 22, wherein the cache manager is further adapted for selectively writing said one or more stripes from the cache to the array by selecting one or more error-correction stripes including new error-correction information in the cache to write to the array

25. The storage device of claim 15, wherein the cache manager is further adapted for reading a stripe into the cache by overwriting a least recently used stripe in the cache that has been written to the array.

26. The storage device of claim 14, wherein in response to a read request received in the controller for one or more data blocks containing requested data, the identification means further identifies one or more data block areas on the array corresponding to the one or more requested data blocks, the data block areas being related to one or more of said stripes containing the requested data; and the cache manager further determines if the cache contains one or more data blocks containing said requested data, and if so, provides the requested data from the cache.

27. A controller for a fault-tolerant storage device having an array of failure independent storage units for storing information as stripes of blocks, including at least data blocks and associated error-correction blocks, comprising:
a cache for temporarily storing at least data blocks and associated error-correction blocks;
a driver in data communication with the array and with said at least one cache, the driver adapted for:
identifying one or more data block areas on the array to write new data received in one or more new data blocks corresponding to the data block areas, the data block areas including old data and being related to one or more of said stripes;
determining if the cache contains one or more data blocks containing said old data, and if not, reading said old data from the array into the cache;
determining if the cache contains one or more error-correction blocks containing error-correction information associated with said old data, and if not, reading one or more blocks containing error-correction information associated with said old data from the array into the cache, the one or more error-correction blocks being related to one or more of said stripes;
generating new error-correction information based on the information in said one or more error-correction blocks, said old data and said new data;
overwriting said old data in said one or more data blocks in the cache with said new data;
writing the new error-correction information in the one or more error-correction blocks in the cache for subsequent writing to the array; and
writing the new data to said corresponding data block areas in the array.

28. The controller of claim 27, wherein:
the cache is further for temporarily storing at least one data stripe containing data blocks, and associated error-correction stripe containing error-correction information for the data blocks;
the driver is further adapted for:
identifying at least one data stripe including said one or more data block areas on the array;
determining if the cache contains said at least one identified data stripe including said one or more data blocks containing the old data, and if not reading said at least one identified data stripe containing the old data from the array into the cache;
determining if the cache contains at least one associated error-correction stripe including said one or more error-correction blocks, and if not, reading the at least one associated error-correction stripe including said one or more error-correction blocks containing the error-correction information associated with said old data from the array into the cache;
overwriting said old data in said one or more data blocks in said at least one identified data stripe in the cache with said new data;
writing the new error-correction information in said at least one associated error-correction stripe in the cache including said one or more error-correction blocks; and
writing said new one or more data blocks to said corresponding data block areas in the at least one identified data stripe in the array.

29. The controller of claim 28, wherein the driver is further adapted for maintaining a list including one or more references to one or more stripes in the cache.

30. The controller of claim 29, wherein the driver is further adapted for: (1) checking said list to determine if the cache contains said at least one data stripe including the one or more data blocks containing the old data, and (2) adding a reference to said list for each identified data stripe containing old data read into the cache from the array.

31. The controller of claim 29, wherein the driver is further adapted for: (1) checking said list to determine if the cache contains said at least one associated error-correction stripe, and (2) adding a reference to said list for each associated error-correction stripe read into the cache

32. The controller of claim 27, wherein the driver is further adapted for selectively writing one or more error-correction blocks in the cache containing new error-correction information to the array.

33. The controller of claim 28, wherein the driver is further adapted for detecting presence of at least one preselected condition, and if said preselected condition is present, selectively writing one or more stripes from the cache to the array before reading a stripe into the cache.

34. The controller of claim 33, wherein the driver is further adapted for detecting presence of said preselected condition by determining if the cache is full, and if so, selectively writing one or more stripes from the cache to the array before reading said stripe into the cache.

35. The controller of claim 33, wherein the driver is further adapted for selectively writing said one or more stripes from the cache to the array by selecting one or more error-correction stripes including new error-correction information in the cache to write to the array

36. The controller of claim 28, wherein the controller is further adapted for reading a stripe into the cache by overwriting a least recently used stripe in the cache that has been written to the array.

37. The controller of claim 27, wherein the driver is further adapted for:
receiving a read request for one or more data blocks containing requested data;
identifying one or more data block areas on the array corresponding to the one or more requested data blocks, the data block areas being related to one or more of said stripes containing the requested data; and
determining if the cache contains one or more data blocks containing said requested data, and if so, providing the requested data from the cache.
